# EUROPÄISCHE PATENTANMELDUNG

(11) **EP 3 178 614 A1**
(43) Veröffentlichungstag der Anmeldung: **14.06.2017**
(21) Anmeldenummer: 15199475.3
(22) Anmeldetag: 11.12.2015
(51) Int. Cl.: B25F 5/00, A47L 9/24, F16L 37/00, B23Q 11/00

(54) **ANSCHLUSSVORRICHTUNG**

(71) Anmelder: HILTI Aktiengesellschaft, 9494 Schaan (LI)
(72) Erfinder: Taack-Trakranen, John Van, 81475 Muenchen (DE)
(74) Vertreter: Hilti Aktiengesellschaft Corporate Intellectual Property

(57) **Zusammenfassung**

Anschlussvorrichtung (100) zum Anschließen eines Saugschlauchs (200) an eine Werkzeugmaschine (300), mit einem Rohrstück (90), das eine werkzeugmaschinenseitige Eintrittsöffnung (91), eine schlauchseitige Austrittsöffnung (93) und eine dazwischen befindliche Rohrkrümmung (95) aufweist, wobei das Rohrstück (90) einen zwischen der Rohrkrümmung (95) und der schlauchseitige Austrittsöffnung (93) befindlichen Führungsabschnitt (97) aufweist, in dem ein freies Ende des Saugschlauchs (200) derart aufgenommen ist, dass das freie Ende (210) des Saugschlauchs (200) über eine Führungslänge (FL), die wenigstens einem halben Schlauchdurchmesser (SD) entspricht, innerhalb des Führungsabschnitts (97) gerade geführt ist, wobei die Anschlussvorrichtung (100) dafür ein an dem freien Ende (210) des Saugschlauchs (200) angeordnetes Endstück (70) und, vorzugsweise von diesem durch einen Abstand (AS) beabstandet, ein am Saugschlauch (200) angeordnetes Adaptergegenstück (80) aufweist, wobei das Endstück (70) vollständig und das Adaptergegenstück (80) zumindest abschnittsweise innerhalb eines durch den Führungsabschnitt (97) definierten Volumens angeordnet ist.

## Beschreibung

Die vorliegende Erfindung betrifft eine Anschlussvorrichtung zum Anschließen eines Saugschlauchs an eine Werkzeugmaschine. Die Anschlussvorrichtung ist ausgestattet mit einem Rohrstück, das eine werkzeugmaschinenseitige Eintrittsöffnung, eine schlauchseitige Austrittsöffnung und eine dazwischen befindliche Rohrkrümmung aufweist. Die vorliegende Erfindung betrifft ebenfalls eine Werkzeugmaschine mit einer solchen Anschlussvorrichtung.

Anschlussvorrichtungen der eingangs genannten Art sind grundsätzlich aus dem Stand der Technik bekannt. Sie dienen dem Anschließen einer stauberzeugenden Werkzeugmaschine, beispielsweise eines Wandschlitzgeräts oder dergleichen, an eine Absaugvorrichtung über einen Saugschlauch.

Aus dem Stand der Technik bekannte Anschlussvorrichtungen haben den Nachteil, dass bei einem Betrieb der Werkzeugmaschine, durch den typischerweise Vibrationen entstehen, der Saugschlauch reißen oder sich von der Anschlussvorrichtung lösen kann. Dadurch kann es zu einer unerwünschten Staubbelastung der Umgebung und einer Gesundheitsbelastung des Anwenders kommen der Werkzeugmaschine kommen.

Es ist Aufgabe der vorliegenden Erfindung, eine Anschlussvorrichtung sowie eine Werkzeugmaschine mit einer Anschlussvorrichtung zu schaffen, bei der der Saugschlauch besonders sicher gehalten ist.

Bezüglich der Anschlussvorrichtung wird die Aufgabe dadurch gelöst, dass das Rohrstück einen zwischen der Rohrkrümmung und der schlauchseitigen Austrittsöffnung befindlichen Führungsabschnitt aufweist, in dem ein freies Ende des Saugschlauchs derart aufgenommen ist, dass das freie Ende des Saugschlauchs über eine Führungslänge, die wenigstens einem halben Schlauchdurchmesser entspricht, innerhalb des Führungsabschnitts gerade geführt ist. Dafür weist die Anschlussvorrichtung ein an dem freien Ende des Saugschlauchs angeordnetes Endstück und, vorzugsweise von diesem durch einen Abstand beabstandet, ein am Saugschlauch angeordnetes Adaptergegenstück auf. Das Endstück ist vollständig und das Adaptergegenstück zumindest abschnittsweise innerhalb eines durch den Führungsabschnitt definierten Volumens angeordnet.

Vorteilhafterweise wird durch Zusammenwirken des Endstücks und des Adaptergegenstücks ein Herausrutschen des Saugschlauchs aus dem Führungsabschnitt vermieden, wobei gleichzeitig eine Drehung des Saugschlauchs in dessen Umfangsrichtung möglich ist.

Die Erfindung schließt diesbezüglich die Erkenntnis ein, dass insbesondere ein seitlicher Zug an dem Saugschlauch zu einem unerwünschten Reißen des Saugschlauchs führen kann. Des Weiteren wurde erkannt, dass auf konstruktive Lösungen mit einer Querschnittsverengung des Saugschlauchs, die ebenfalls ein verbessertes Abrissverhalten des Saugschlauchs begünstigen könnten, verzichtet werden kann. Somit begünstigt die erfindungsgemäße Anschlussvorrichtung das eine Verbindung zwischen Werkzeugmaschine und Saugschlauch vibrationsfest ist, die Verbindung robust hinsichtlich eines seitlichen und axialen Ziehens am Saugschlauch ist und die Verbindung gleichzeitig einen maximal möglichen Absaugquerschnitt bereitstellt.

In einer besonders bevorzugten Ausgestaltung ist das Adaptergegenstück an der schlauchseitigen Austrittsöffnung wiederlösbar befestigt. Eine wiederlösbare Befestigung ist vorzugsweise mittels einer durch Drehung lösbaren Rasteinheit realisiert. Diese kann beispielsweise als Bajonett-Verbindung oder dergleichen ausgebildet sein. Es hat sich als vorteilhaft herausgestellt, wenn das Adaptergegenstück, als Teil der Rasteinheit, eine abgestufte Krempe aufweist, die vorzugsweise mit einer entsprechend ausgestalteten schlauchseitigen Austrittsöffnung korrespondiert. Alternativ oder zusätzlich kann das Adaptergegenstück ausgebildet sein, dass es beispielsweise mittels einer Presspassung im Bereich der schlauchseitigen Austrittsöffnung an dieser gehalten wird.

Es hat sich ebenfalls als vorteilhaft herausgestellt, wenn das Adapterstück, gegen eine Axialbewegung relativ zum Saugschlauch gesichert, an dem Saugschlauch angeordnet ist. Vorzugsweise ist das Adaptergegenstück ausschließlich in seiner axialen Bewegungsrichtung relativ zum Saugschlauch gesichert und insbesondere radial, das heißt, in Umfangsrichtung bezüglich des Saugschlauchs frei beweglich bzw. drehbar.

Es hat sich als vorteilhaft herausgestellt, wenn das Adaptergegenstück eine zumindest abschnittsweise zum geraden Führungsabschnitt und/oder zur schlauchseitigen Austrittsöffnung gepasste Außenhülse aufweist. Über die Außenhülse kann beispielsweise eine Presspassung zwischen Adaptergegenstück und Führungsabschnitt beziehungsweise dessen schlauchseitige Austrittsöffnung realisiert sein.

Es hat sich ebenfalls als besonders vorteilhaft herausgestellt, wenn das Adaptergegenstück, vorzugsweise koaxial zur Außenhülse angeordnet, eine konusförmige Innenhülse aufweist. Die konusförmige Innenhülse, deren weitester Durchmesser vorzugsweise auf einer dem geraden Führungsabschnitt abgewandten Seite des Adaptergegenstücks befindlich ist, kann beispielsweise ein alternativer Saugschlauch, der einen endständigen Konusadapter aufweist, am Adaptergegenstück befestigt werden. Somit können auch Saugschläuche mit geringerem Durchmesser an der Anschlussvorrichtung befestigt werden.

Es hat sich als vorteilhaft herausgestellt, wenn der Durchmesser des Endstücks größer ist als der Innendurchmesser des Adaptergegenstücks. Genauer gesagt, ist vorzugweise der kleinste Außendurchmesser des Endstücks größer als der größte Innendurchmesser des Adaptergegenstücks. Es hat sich als vorteilhaft herausgestellt, wenn der Durchmesser des Endstücks wenigstens doppelt so große ist, wie die Breite des Endstücks in axialer Richtung.

In einer besonders bevorzugten Ausgestaltung, ist das Endstück zylinderringförmig ausgebildet. Weiter bevorzugt weist das Endstück ein Innengewinde zum Aufschrauben des Saugschlauchs auf.

Es hat sich als vorteilhaft herausgestellt, wenn die Rohrkrümmung eine Krümmung zwischen 100° und 120° sowie vorzugsweise von 110° aufweist und/oder der Führungsabschnitt, das Endstück und das Adaptergegenstück koaxial zueinander angeordnet sind. Eine Krümmung zwischen 100° und 120° sowie vorzugsweise von 110° hat sich als besonders vorteilhaft erwiesen, da hierdurch der Staub besonders gut durch die Rohrkrümmung geleitet werden kann. Darüber hinaus erweist sich eine derartige Krümmung als besonders materialschonend für die Innenseite der Rohrkrümmung, da hierdurch dem abtransportierten Staub nur eine relativ flache Angriffsfläche geboten ist.

Bezüglich der Werkzeugmaschine wird die Aufgabe gelöst durch eine Werkzeugmaschine mit einer vorbeschriebenen Anschlussvorrichtung.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung einer erfindungsgemäßen Anschlussvorrichtung;
- Fig. 2: ein bevorzugtes Ausführungsbeispiel einer Anschlussvorrichtung in perspektivischer Darstellung;
- Fig. 3: eine Schnittdarstellung A-A der Ansicht aus Fig. 2;
- Fig. 4: ein Endstück der erfindungsgemäßen Anschlussvorrichtung in verschiedenen Ansichten;
- Fig. 5: ein erfindungsgemäßes Adaptergegenstück in verschiedenen Ansichten
- Fig. 6: eine Schnittdarstellung durch ein weiteres Ausführungsbeispiel einer erfindungsgemäßen Anschlussvorrichtung;
- Fig. 7: eine perspektivische Darstellung einer Anschlussvorrichtung, wobei das Adaptergegenstück entnommen ist.

### Ausführungsbeispiele:

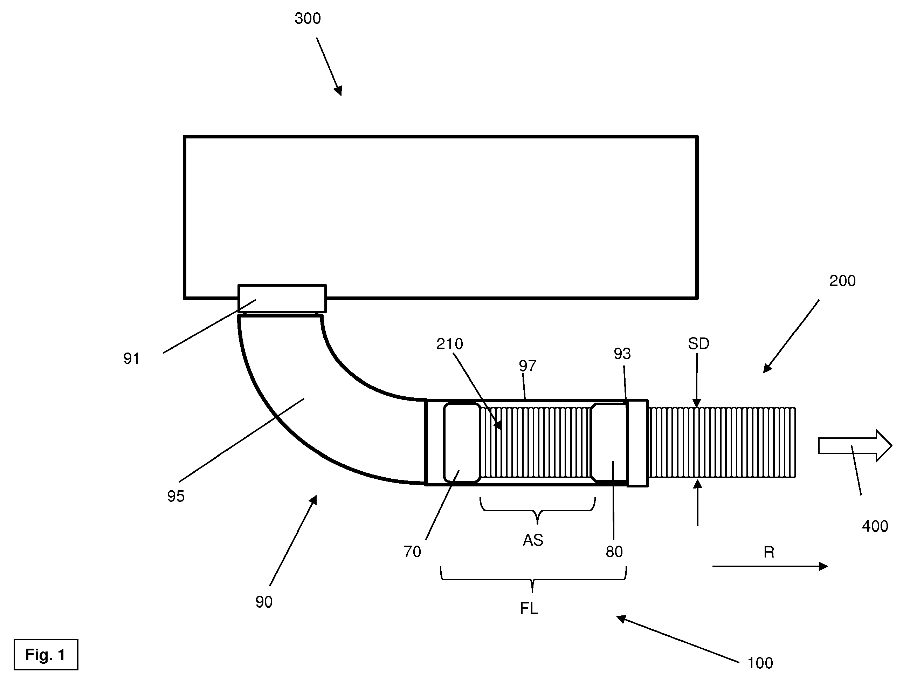

Fig. 1 zeigt eine Anschlussvorrichtung 100 zum Anschließen eines Saugschlauchs 200 an eine hier schematisch dargestellte Werkzeugmaschine 300. Die Werkzeugmaschine 300 kann beispielsweise ein Schlitzgerät sein.

Die Anschlussvorrichtung 100 weist ein Rohrstück 90 auf, das wiederum eine werkzeugmaschinenseitige Eintrittsöffnung 91, eine schlauchseitige Austrittsöffnung 93 und eine dazwischen befindliche Rohrkrümmung 95 aufweist. Im vorliegend dargestellten Ausführungsbeispiel weist die Rohrkrümmung 95 eine Krümmung von 90° auf. Die Anschlussvorrichtung 100 ist über die werkzeugmaschinenseitige Eintrittsöffnung 91 mit der Werkzeugmaschine 300 verbunden.

Das Rohrstück 90 weist einen zwischen der Rohrkrümmung 95 und der schlauchseitigen Austrittsöffnung 93 befindlichen Führungsabschnitt 97 auf, der vorliegenden gerade ausgebildet ist. In diesem Führungsabschnitt 97 ist ein freies Ende 210 des Saugschlauchs 200 aufgenommen. Das freie Ende 210 des Saugschlauchs 200 ist über eine Führungslänge FL, die hier vorliegend etwa dem Sechsfachen des halben Schlauchdurchmessers SD entspricht, innerhalb des Führungsabschnitts 97 geführt.

Dafür weist die Anschlussvorrichtung 100 ein an dem freien Ende 210 des Saugschlauchs 200 angeordnetes Endstück 70 und, von diesem durch einen Abstand AS beabstandet, ein am Saugschlauch 200 angeordnetes Adaptergegenstück 80 auf. Im vorliegend dargestellten Ausführungsbeispiel ist der Abstand AS etwa anderthalbmal so groß wie der Schlauchdurchmesser SD. Die Führungslänge FL ist, wie der Fig. 1 entnommen werden kann, größer als der Abstand AS zwischen Endstück 70 und Adaptergegenstück 80.

Wie ebenfalls der Fig. 1 entnommen werden kann, ist das Endstück 70 vollständig und das Adaptergegenstück 80 abschnittsweise innerhalb eines durch den Führungsabschnitt 97 definierten Volumens angeordnet.

Der Führungsabschnitt 97, das Endstück 70 und das Adaptergegenstück 80 sind koaxial zueinander angeordnet. Aus der Werkzeugmaschine 300 abgeführter Staub wird über die Anschlussvorrichtung 100 in Richtung einer Staubsaugereinheit 400 geführt, die hier lediglich schematisch durch einen Pfeil nach rechts dargestellt ist.

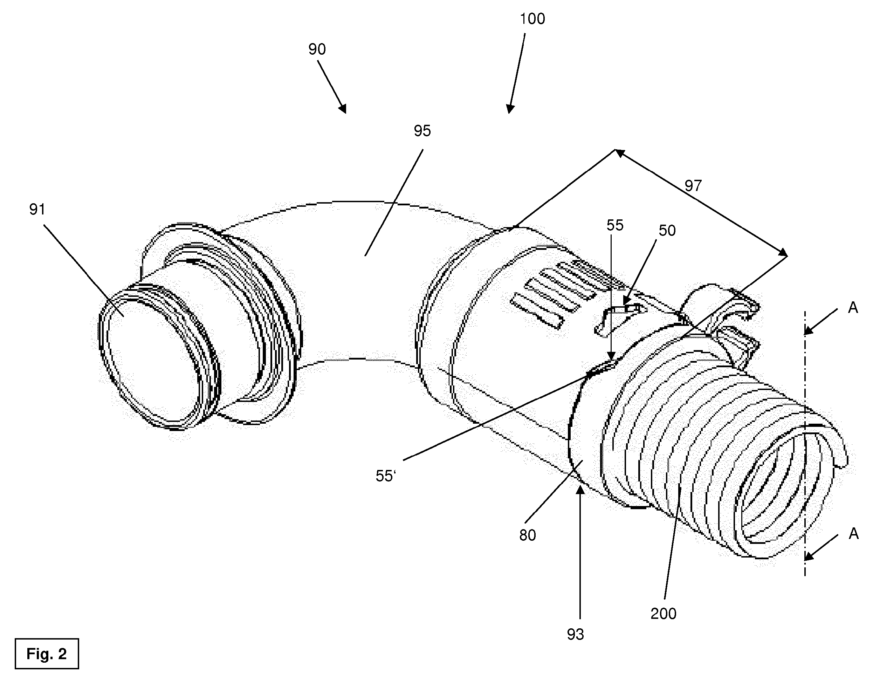

Fig. 2 zeigt eine perspektivische Darstellung einer Anschlussvorrichtung 100 mit angebrachtem Saugschlauch 200. Gut zu erkennen ist eine stöpselförmig ausgebildete Eintrittsöffnung 91, die in eine korrespondierende und hier nicht dargestellte Öffnung der Werkzeugmaschine 300 eingesteckt werden kann. Auf der gegenüberliegenden Seite weist das Rohrstück 90 eine Austrittsöffnung 93 auf. Zwischen der Eintrittsöffnung 91 und der schlauchseitigen Austrittsöffnung 93 weist das Rohrstück 90 eine Rohrkrümmung 95 und den geraden Führungsabschnitt 97 auf.

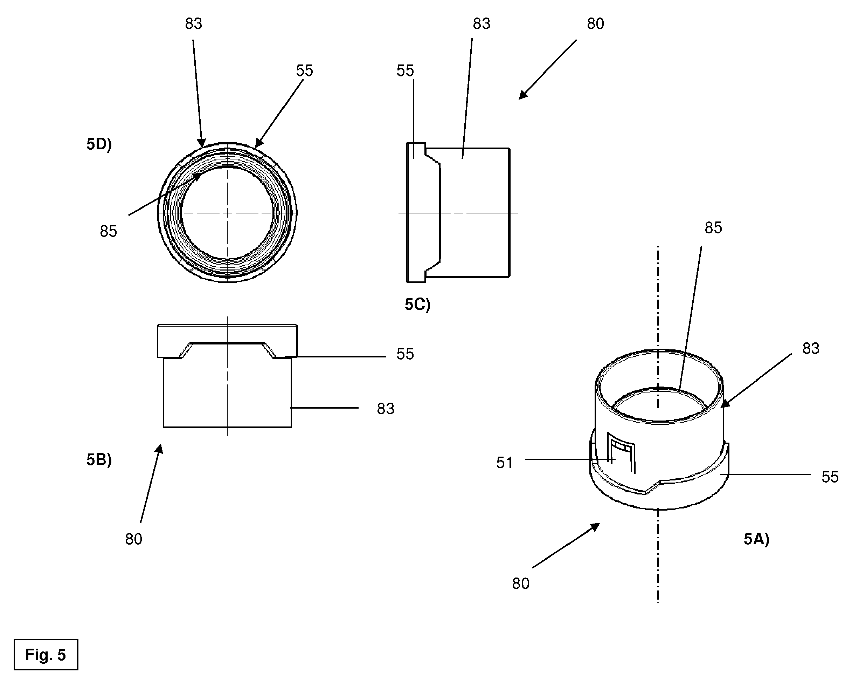

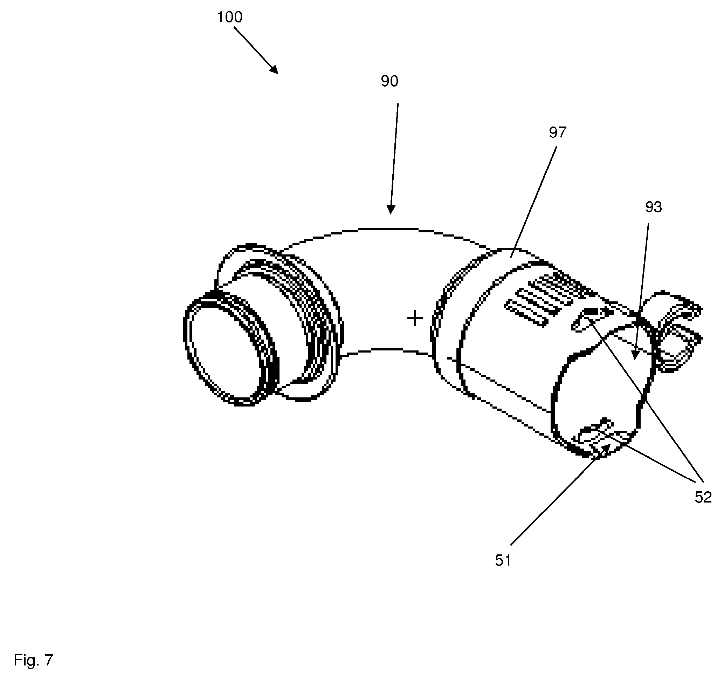

In dem in Fig. 2 dargestellten Ausführungsbeispiel ist das Adaptergegenstück 80 zumindest abschnittsweise im Führungsabschnitt 97 aufgenommen. Das Adaptergegenstück 80 ist dabei an der schlauchseitigen Austrittsöffnung 93 der Anschlussvorrichtung 100 wiederlösbar befestigt mittels einer durch Drehung lösbaren Rasteinheit 50, die im vorliegend dargestellten Ausführungsbeispiel eine am Adaptergegenstück 80 angeordnete abgestufte Krempe 55 aufweist. Korrespondierend dazu, ist die schlauchseitige Austrittsöffnung 93 ebenfalls abgestuft ausgebildet. Die abgestufte Krempe 55 am Adaptergegenstück 80 kann ebenfalls beispielsweise der Fig. 5 entnommen werden. Eine korrespondierende Abstufung 55' der schlauchseitigen Austrittsöffnung 93 sowohl der Fig. 2 als auch in Fig. 7 gezeigt.

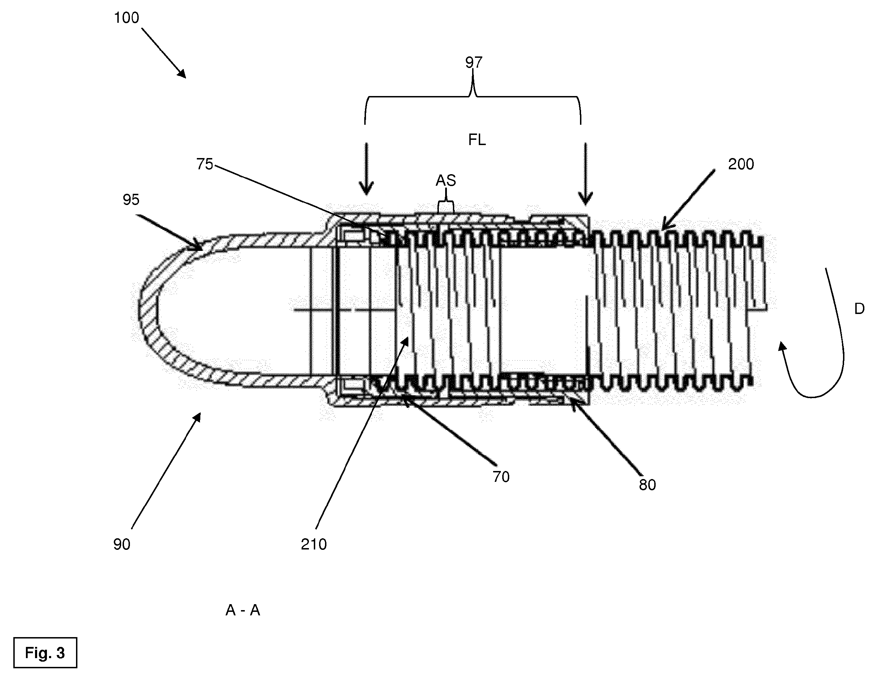

Auf der rechten Seite in Fig. 2 dargestellt, ist ein Schnittlinie A-A, deren Schnittansicht A-A nun mit Bezug auf Fig. 3 genauer erläutert werden soll.

Auf der linken Seite der Fig. 3 ist die Rohrkrümmung 95 des Rohrstücks 90 gut zu erkennen. Rechts davon in Richtung des Saugschlauchs 200 befindlich, ist der Führungsabschnitt 97 in dem ein freies Ende 210 des Saugschlauchs 200 über eine Führungslänge FL geführt ist. Endständig am freien Ende 210 des Saugschlauchs 200 angeordnet ist ein Endstück 70. Mit einem vergleichsweise kleinen Abstand AS axial davon beabstandet ist das Adaptergegenstück 80 am Saugschlauch 200 angeordnet. Durch das Adaptergegenstück 80 hindurchgeführt ist der Saugschlauch 200.

Gut zu sehen in der Schnittdarstellung der Fig. 3 ist das Innengewinde 75 des Endstücks 70, das dem Aufschrauben des Saugschlauchs 200 zu dessen axialer Sicherung innerhalb des Endstücks 70 dienen. Auf der rechten Seite des Führungsabschnitts 97 ist das Adaptergegenstück 80 gut zu erkennen, welches über den Saugschlauch 200 geschoben wird. Um zu verhindern, dass sich das Adaptergegenstück 80 zu weit entlang dem Saugschlauch 200 bewegt, kann ein entsprechendes nicht gezeigtes Stoppelement in Form eines Ringes hinter das Adaptergegenstück 80 in Schlauchrichtung R befestigt werden. Ein derartiges Stoppelement ist hierzu fest mit dem Saugschlauch 200 zu verbinden.

Das Adaptergegenstück 80 ist am Führungsabschnitt 97 wiederlösbar befestigt, sodass der Saugschlauch 200 insgesamt zwar radial in Richtung der angezeigten Drehrichtung D drehbar ist, axial aber fest bezüglich des Führungsabschnitt 97 ist.

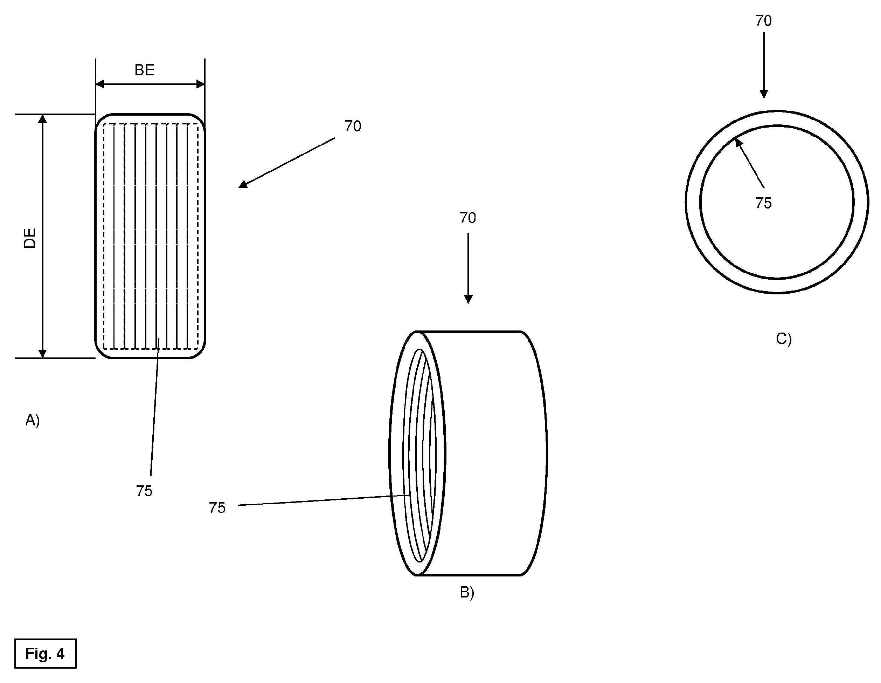

Fig. 4 zeigt verschiedene Ansichten des Endstücks 70. Ein Schnitt entlang des Durchmessers DE ist in Fig. 4A dargestellt. Gut zu erkennen sind die radial nach außen abgesetzten innenseitigen Profilrillen 75 zur Aufnahme des hier nicht gezeigten Saugschlauchs. Der Durchmesser DE des Endstücks 70 ist im vorliegend dargestellten Ausführungsbeispiel etwa doppelt so groß wie die Breite BE des Endstücks 70.

Fig. 4B zeigt eine perspektivische Darstellung des Endstücks 70 zur weiteren Verdeutlichung der Profilrillen 75. Schließlich ist ein Schnitt radial durch das Endstück 70 in Fig. 4C gezeigt. Gut zu erkennen ist die zylinderringförmige Ausbildung des Endstücks 70.

Fig. 5 zeigt ein erfindungsgemäßes Adaptergegenstück 80, dessen äußere Oberfläche auch in den Fig. 2 und 3 gut zu erkennen ist, in verschiedenen Darstellungen.

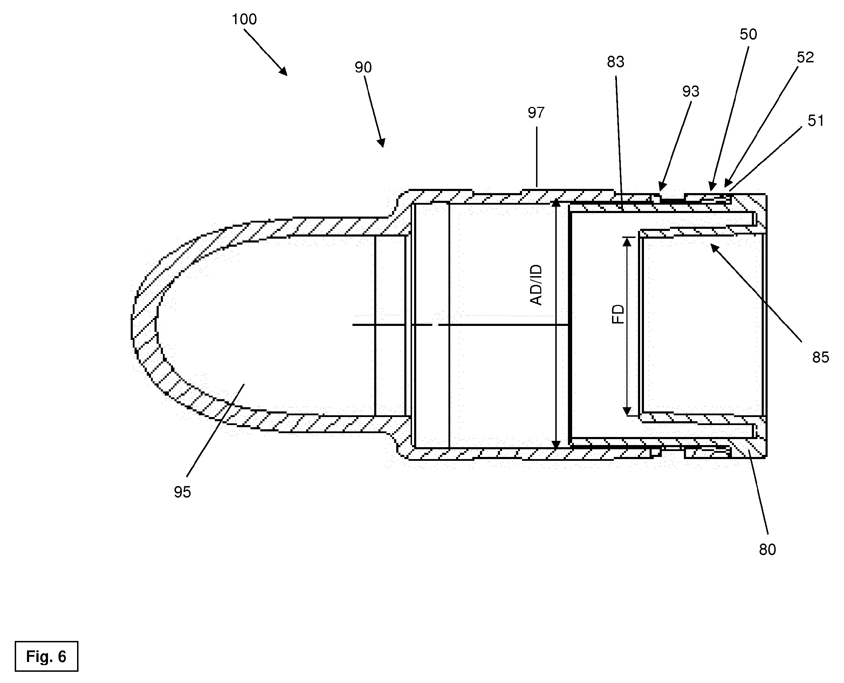

Dazu zeigt Fig. 5A zunächst das Adaptergegenstück 80 in perspektivischer Darstellung. Gut zu erkennen ist eine zylinderförmig ausgebildete Außenhülse 83 des Adapterstücks 80, die zur schlauchseitigen Austrittsöffnung (vgl. Fig. 6) mittels Übergangspassung gepasst ist. An der Außenhülse 83 des Adaptergegenstücks 80 ist eine abgestufte Krempe 55 ausgebildet, die einen Teil des Rastmechanismus darstellt, der zum wiederlösbaren Befestigen des Adaptergegenstücks 80 an der schlauchseitigen Austrittsöffnung beziehungsweise dem Führungsabschnitt vorgesehen ist. Auf der Außenhülse 83 ist die zu der Rasteinheit 50 gehörende Rastnase 51 positioniert, welche als elastisches Fügeteil ausgestaltet ist und mit der korrespondierenden Aufnahme 52 der Rasteinheit 50 formschlüssig verbindbar ist. Koaxial zur Außenhülse 83 angeordnet ist eine konusförmige Innenhülse 85. Die konusförmige Ausgestaltung ist besonders gut der Unteransicht 5D, beziehungsweise der Fig. 6 zu entnehmen.

Fig. 5B und C, die jeweils eine Seitenansicht des Adaptergegenstücks 80 zeigen, ist die Ausbildung der abgestuften Krempe 55 gut zu erkennen. Im vorliegend dargestellten Ausführungsbeispiel sind in Umfangsrichtung zwei Erhebungen sowie zwei Niederungen zu erkennen, die die Abstufung der Krempe 55 bilden.

Fig. 6 zeigt einen Schnitt durch ein Ausführungsbeispiel einer erfindungsgemäßen Anschlussvorrichtung 100, wobei aus Deutlichkeitsgründen auf die Darstellung des Saugschlauchs 200 verzichtet wurde. Gut zu erkennen ist, dass der gerade Führungsabschnitt 97 des Rohrstücks 90 in das Adaptergegenstück 80 zumindest abschnittsweise hineinragt.

Das Adaptergegenstück 80 weist eine Außenhülse 83 mit einem Außendurchmesser AD auf, der zum Innendurchmesser ID des Führungsabschnitts 97 gepasst ist. Im vorliegend dargestellten Ausführungsbeispiel soll eine Übergangspassung zwischen dem Führungsabschnitt 97 und der Außenhülse 83 angenommen werden, sodass das Adaptergegenstück 80 leicht in den Führungsabschnitt 97 einzuführen ist.

Der Fig. 6 kann ebenfalls entnommen werden, dass das Adapterstück 80 mittels der bereits beschriebenen durch Drehung lösbaren Rasteinheit 50 an der schlauchseitigen Austrittsöffnung 93 des Rohrstücks 90, genauer gesagt des Führungsabschnitts 97, wiederlösbar angeordnet ist.

Wie dem in Fig. 6 dargestellten bevorzugten Ausführungsbeispiel ebenfalls entnommen werden kann, weisen sowohl die konusförmige Innenhülse 85 als auch die Außenhülse 83 innenseitig eine glatte Oberfläche auf. Der kleinste freie Durchmesser FD der konusförmigen Innenhülse 80 entspricht dem Schlauchdurchmesser SD, der beispielsweise in Fig. 1 gezeigt ist.

Fig. 7 zeigt schließlich eine Anschlussvorrichtung 100 ohne Adaptergegenstück 80. Gut zu erkennen ist eine am inneren Umfang der Austrittsöffnung 93 angeordnete Aufnahme 52 der Rasteinheit 50, die der elastischen Rastnase 51 (vgl. Fig. 6) zugehörig ist.

### Bezugszeichenliste

- 50: Rasteinheit
- 51: Rastnase
- 52: Aufnahme
- 55: Krempe
- 55': korrespondierende Abstufung
- 70: Endstück
- 75: Innengewinde am Endstück
- 80: Adaptergegenstück
- 83: Außenhülse des Adaptergegenstücks
- 85: konusförmige Innenhülse des Adaptergegenstücks
- 86: Profilrillen am Adaptergegenstück
- 90: Rohrstück
- 91: werkzeugmaschinenseitige Eintrittsöffnung
- 93: schlauchseitige Austrittsöffnung
- 95: Rohrkrümmung
- 97: gerader Führungsabschnitt
- 100: Anschlussvorrichtung
- 200: Saugschlauch
- 210: Freies Ende des Saugschlauchs
- 300: Werkzeugmaschine
- 400: Staubsaugereinheit
- AD: Aussendurchmesser der Aussenhülse
- AS: Abstand
- BE: Breite des Endstücks
- DE: Durchmesser des Endstücks
- FD: freier Durchmesser der konusförmigen Innenhülse
- FL: Führungslänge
- ID: Innendurchmesser des Führungsabschnitts
- SD: Schlauchdurchmesser

## Patentansprüche

1. Anschlussvorrichtung (100) zum Anschließen eines Saugschlauchs (200) an eine Werkzeugmaschine (300), mit einem Rohrstück (90), das eine werkzeugmaschinenseitige Eintrittsöffnung (91), eine schlauchseitige Austrittsöffnung (93) und eine dazwischen befindliche Rohrkrümmung (95) aufweist,
**dadurch gekennzeichnet, dass** das Rohrstück (90) einen zwischen der Rohrkrümmung (95) und der schlauchseitigen Austrittsöffnung (93) befindlichen Führungsabschnitt (97) aufweist, in dem ein freies Ende (210) des Saugschlauchs (200) derart aufgenommen ist, dass das freie Ende (210) des Saugschlauchs (200) über eine Führungslänge (FL), die wenigstens einem halben Schlauchdurchmesser (SD) entspricht, innerhalb des Führungsabschnitts (97) gerade geführt ist, wobei die Anschlussvorrichtung (100) dafür ein an dem freien Ende (210) des Saugschlauchs (200) angeordnetes Endstück (70) und, vorzugsweise von diesem durch einen Abstand (AS) beabstandet, ein am Saugschlauch (200) angeordnetes Adaptergegenstück (80) aufweist, wobei das Endstück (70) vollständig und das Adaptergegenstück (80) zumindest abschnittsweise innerhalb eines durch den Führungsabschnitt (97) definierten Volumens angeordnet ist.

2. Anschlussvorrichtung (100) nach Anspruch 1,
**dadurch gekennzeichnet, dass** das Adaptergegenstück (80) an der schlauchseitigen Austrittsöffnung (93) wiederlösbar befestigt ist, vorzugsweise mittels einer durch Drehung lösbaren Rasteinheit (50).

3. Anschlussvorrichtung (100) nach Anspruch 2,
**dadurch gekennzeichnet, dass** das Adaptergegenstück (80), als Teil der Rasteinheit (50), eine abgestufte Krempe (55) aufweist, die mit entsprechend ausgestalteten schlauchseitigen Austrittsöffnung (93) korrespondiert.

4. Anschlussvorrichtung (100) nach einem der vorangehenden Ansprüche,
**dadurch gekennzeichnet, dass** das Adaptergegenstück (80), gegen eine axiale Bewegung relativ zum Saugschlauchs (200) gesichert, an dem Saugschlauch (200) angeordnet ist.

5. Anschlussvorrichtung (100) nach einem der vorangehenden Ansprüche,
**dadurch gekennzeichnet, dass** das Adaptergegenstück (80) eine zumindest abschnittsweise zum geraden Führungsabschnitt (97) und/oder zur schlauchseitigen Austrittsöffnung (93) gepasste Außenhülse (83) und, koaxial dazu angeordnet, eine konusförmige Innenhülse (85) aufweist.

6. Anschlussvorrichtung (100) nach einem der vorangehenden Ansprüche,
**dadurch gekennzeichnet, dass** das Endstück (70) zylinderringförmig ausgebildet ist und ein Innengewinde zum Aufschrauben des Saugschlauchs (200) aufweist.

7. Anschlussvorrichtung (100) nach einem der vorangehenden Ansprüche,
**dadurch gekennzeichnet, dass** die Rohrkrümmung (95) eine Krümmung zwischen 100 und 120 Grad sowie vorzugsweise von 110 Grad aufweist und der Führungsabschnitt (97), das Endstück (70) und das Adaptergegenstück (80) koaxial zueinander angeordnet sind.

8. Werkzeugmaschine (300) mit einer Anschlussvorrichtung (100) nach einem der vorangehenden Ansprüche.
